# EUROPEAN PATENT APPLICATION

(11) **EP 1 750 350 A2**
(43) Date of publication of application: **07.02.2007**
(21) Application number: 06016245.0
(22) Date of filing: 03.08.2006
(51) Int. Cl.: H02K 1/27, H02K 15/03

(54) **Motor with single bent permanent magnet and its method of manufacture**

(30) Priority: 04.08.2005 KR 20050071216; 22.08.2005 KR 20050076703; 17.11.2005 KR 20050110417
(71) Applicant: LG Electronics Inc., Yongdungpo-gu Seoul (KR)
(72) Inventor: Jun, Cha Seung, Seoul (KR); Min, Byoung Wook, Seoul (KR); Jeon, Si Moon, Seoul (KR)
(74) Representative: TER MEER - STEINMEISTER & PARTNER GbR

(57) **Abstract**

The motor (100) of the present invention comprises; a stator (110), a rotor (120) rotating to the stator and a permanent magnet (130) installed to the rotor, wherein the permanent magnet is a single body and formed continuously. The permanent magnet is a continuous belt that can be bent to form a closed curve. The closed curve is attached to the rotor using adhesive tape (140).

## Description

### Background of the invention

### Field of the invention

This invention is related to a motor, more particularly, to a motor and motor manufacturing method enhanced permanent magnets imbalance magnetization.

### Description of the Related art

In general, a motor is a device driving other devices by converting electronic energy into mechanical energy. A motor consists of a stator fixed onto a specific device and a rotor rotated relatively to the stator, and a permanent magnet consists of a sinter ferrite installed in the rotor.

The permanent magnet also consists of a fixed amount of segments and each segment is multipolar - magnetized in the radial direction.

As each segment is multipolar-magnetized in radial direction on the said motor, however, an imbalance on magnetization can be occurred between the segments. As imbalance on magnetization is occurred between the segments, a high frequency is caused. The high frequency produces an electric current distortion and an error on the positions/speed detections of the hall sensors. Many problems, therefore, are occurred such as the control capacity of the motor is reduced, and the vibration/noise of the washing machine, etc, having the above-mentioned motors is increased.

In addition, on the motor of related art, electromagnetic excitation including cogging torque by the magnetization in radial direction is increased. It is, therefore, defective that the vibration/noise of the washing machine, etc, having the motors is increased.

In addition, on the heretofore in used motor, as numerous magnetic segments are attached to each rotor frame, the manufacturing process becomes enlarged. It is, therefore, defective that the manufacturing costs of the motor are increased and manufacturing process isn't accomplished easily.

Further, on the heretofore in used motor, adhesives are applied to the adhesive sides of the magnets to combine the several magnets to a rotor frame, and the adhesive sides are mutually combined onto the interior of the rotor frame. As the adhesives, therefore, causes a big magnetic gap between the magnets and the rotor frame, the magnetic flux is decreased and the efficiency of the motor is reduced with it.

The magnetic gap can be easily changed by the amount of adhesives and adhesive strength, and the inferiority defective such as the permanent magnet break is increased after the magnetization, and with this, many things aren't effective on the aspect of the control of the performance.

### Summary of the invention

The present invention is proposed to solve the above-mentioned problems, mainly propose a motor and motor manufacturing method improving the permanent magnets imbalance magnetization.

Another purpose of the invention is proposing a motor and motor manufacturing method improving the electromagnetism excitation including cogging torque by improving the magnetization method of the permanent magnets.

Another purpose of the invention is proposing a motor and motor manufacturing method reducing the magnetic gap between a permanent magnet and a rotator frame, and maintaining the gap constantly at the same time.

Another purpose of the invention is proposing a motor and motor manufacturing method that the manufacturing costs are decreased as the operation efficiency is increased.

A motor according to the invention comprises: a stator; a rotor rotating to the stator; and a permanent magnet installed to the rotor, wherein the permanent magnet is a single body and formed continuously.

In another aspect of the invention, a motor includes: a stator; a rotor rotating to the stator; a permanent magnet attached to the rotor and able to be bent as a continuous single body; and an adhesive material attaching the permanent magnet to the rotor.

A motor manufacturing method according to another aspect of the invention comprises: a preparing a stator, a rotor and a continuously formed non-magnetized body; an attaching non-magnetized body to the rotor; a manufacturing a permanent magnet by magnetizing the non-magnetized body installed in the rotor.

According to the motor and motor manufacturing method according to the present invention, it is effective that the permanent magnets can be magnetized equally all over the permanent magnets as the permanent magnet is continually formed.

It is also effective that the vibration/noise while the motor is operating is decreased as the electromagnetism excitation including cogging torque can be improved with the permanent magnet is magnetized homogenously.

It is also effective that the installation becomes easier as the magnetization take place after installing of the non-magnetized body. The motor manufacturing method, therefore, and the number of the manufacturing process is reduced.

It is also effective that the manufacturing time and costs are saved as the permanent magnet is attached to the rotor with a tape having an adhesive strength at least on one side thereof.

It is also effective that the performance of the motor is increased with the magnetic flux is increased by the reducing of the magnetic gap between the permanent magnets and the rotor as well as the magnetic gap is maintained constantly by the permanent magnet is attached to the rotor with a thin and constant thickness tape.

### Brief description of the drawings

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view of the disassembled motor according to the present invention.

FIG. 2 is a perspective view of the permanent magnet used for the motor according to the present invention.

FIG. 3 is a perspective view of unfolding state of the permanent magnet illustrated in FIG. 2.

FIG. 4 is a partial perspective view of the permanent magnet according to another embodiment of the present invention.

FIG. 5 is a schematic drawing showing the state that the permanent magnet used for a motor according to the present invention is halbach magnetized.

FIG. 6 is a drawing showing the state that the permanent magnet used for a motor according to the present invention is skew magnetized.

FIG. 7 and 8 are drawings showing the state that the permanent magnets according to other embodiments of the present invention are skew magnetized.

FIG. 9 is a cross-sectional view of I-I' on FIG. 1.

FIG. 10 is a cross-sectional view of I-I' of FIG. 1 according to other embodiment of the present invention.

FIG. 11 is a cross-sectional view of I-I' of FIG. 1 according to another embodiment of the present invention.

### Detailed description of the invention.

Reference will now be made in detail to the preferred embodiments of the present invention, examples of which are illustrated in the accompanying drawings. Wherever possible, the same reference numbers will be used throughout the drawings to refer to the same or like parts.

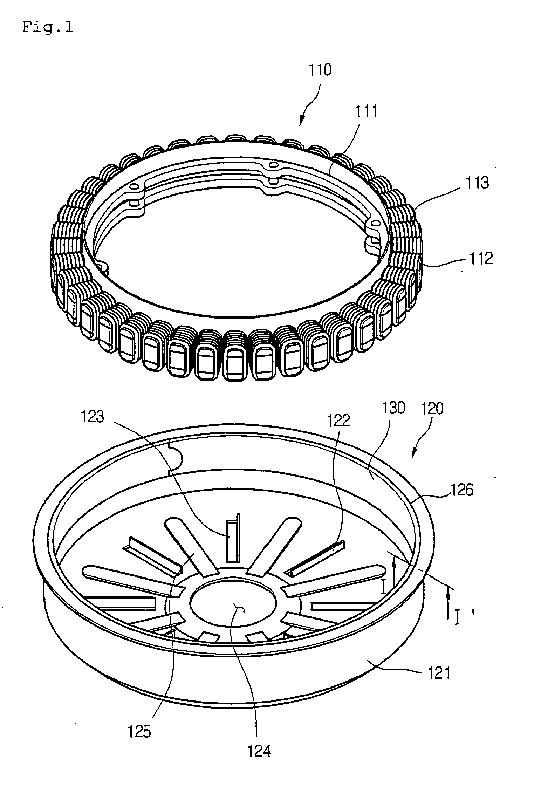

FIG 1 is the perspective view of the disassembled motor according to the present invention.

Referring to FIG 1, the motor 100 according to the present invention comprises a stator 110, a rotor 120 rotating to the stator and a permanent magnet 130 installed to the rotor 120.

In detail, the stator 110 is a laminated form with a magnetic body that is approximately less then 1 mm. At this point, the number of laminating of the magnetic body can be determined by the output of the motor 100 required. The stator 110 includes cylinder typed yoke 111 and a plurality of winding portion 112 protruded from the yoke 111.

More particularly, the winding portion 112 is protruded from the center of the cylinder typed yoke to the outside at a predetermined length in a circular shape. And the winding portion 112 is wound with a coil 113 in a predetermined number.

At this point, it is preferable to decide the number of winding portion 112 in accordance with the number of the phases and poles in the range that the motor can rotate smoothly.

The rotor 120 is rotating part on the outside of the stator 110, the electronic energy can be converted into mechanical energy due to rotating of the rotor.

Further, the rotor 120 comprises a rotor frame 121. Particularly, the rotor frame 121 consists of magnetic body such as metallic materials and etc. Also, in the inside of the motor frame 121, a mounting portion 126 installed the permanent magnet 130 therein is formed.

A plurality of blade 122 is formed on the bottom of the inside of the rotor 120. The blade 122 create air movement when the rotor 120 is rotating, the heat generated from the coil 113 is cooled and discharged to the outside.

Further, the blade 122 is formed by cutting and bending at a predetermined size of bottom surface of the rotor frame 121. When the blade 122 is formed according to this, a groove 123 is formed on the cutting surface, which the groove 123 makes the air movement possible to protect against heat with the blade 122. In the center of the rotor 120, shaft-inserting hole 124 is formed to insert the rotating shaft (not illustrated). Also, at the bottom of the rotor 120 a plurality of a rib 125 is formed to reinforce the strength.

The permanent magnet 130 reacts with the magnetic produced by the coil 113, applied with electric current, so the rotor 120 rotates. The following detailed explanation is about the permanent magnet 130.

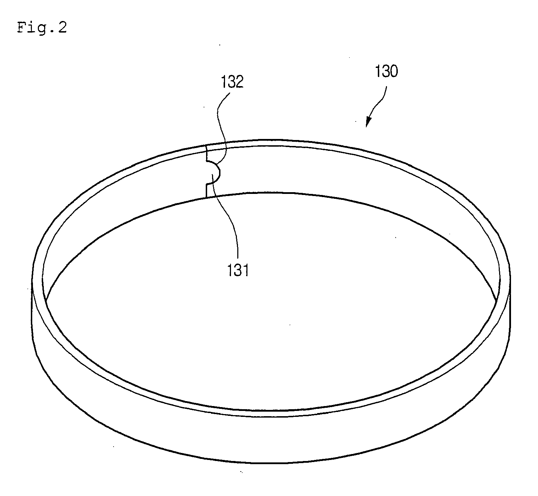

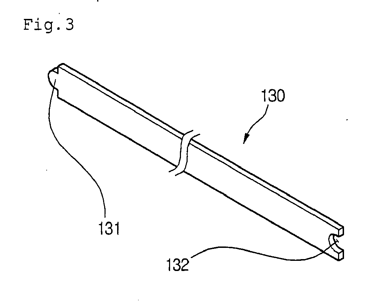

FIG 2 is the perspective view of a permanent magnet used for the motor according to the present invention and FIG 3 is the perspective view of the permanent magnet on FIG 2.

Referring to FIG 2 and FIG 3, the permanent magnet 130 according to the present invention is continuously formed as whole. That is, the permanent magnet 130 is not formed by assembling structure of a plurality of a small magnet but by a single magnet.

The permanent magnet 130 produced according to the above forms a continuous belt type figure suitable for installing on the mounting portion 126.

Rare earth metal is included when manufacturing the permanent magnet. Rare earth metal is a ferromagnetic body material with a high magnetic force, so though mixed with substance such as rubber, it can have the predetermined amount of magnetic force required for the permanent magnet 130. The Permanent magnet 130 produced according to the above has ductility so it can be easily transformed.

Accordingly, the permanent magnet 130 can be easily handled and transformed to a suitable shape to install on the mounting portion 126.

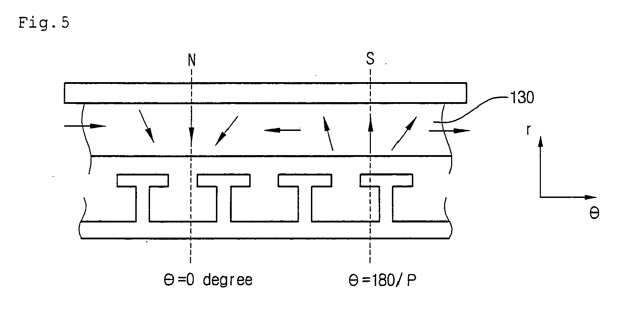

The permanent magnet 130 can be magnetized by halbach magnetization, magnetized permanent magnet 130 become isotropic magnet or anisotropic magnetic magnet. When its halbach magnetized, the permanent magnet 130 reduces the thickness of the rotor frame 121, so sinuously magnetized to be homogenously magnetized. For detailed explanation of this, see FIG 5 below.

On the other hand, in this embodiment, the halbach-magnetized permanent magnet 130 was only presented, but this does not restrict the sprit of this invention. That is, the permanent magnet 130 can also be magnetized by radial magnetization and etc.

The both side ends of the permanent magnet 130 are prominence and depression shaped to be a close adhesion each other. Particularly, prominence portion 131 is formed on one end of the permanent magnet 130, and depression portion 132 is formed on the other end. So, the prominence portion 131 and depression portion 132 couples together so that the both side ends of the permanent magnet 130 can be a close adhesion. Like the above, in case that the permanent magnet is magnetized, after the both side ends of the permanent magnet 130 are closely attached, the permanent magnet 130 is magnetized homogenously including the both side ends thereof.

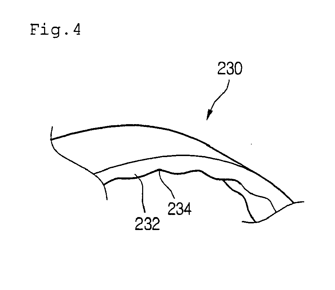

FIG 4 is the partial perspective view of the permanent magnet according to another embodiment.

Referring to FIG 4, the height difference is continuously formed on one surface of permanent magnet 230 according to this embodiment. Particularly, the height of the center of a magnetic pole 232 in the permanent magnet 230 is predetermined height higher than the height of border of a magnetic pole 234 therein. If it is formed like the above, the air gap magnetic flux density can be made sinuously so that the vibration/noises of the motor 100 decrease.

FIG 5 is a schematic drawing of a state that the permanent magnet used for the motor according to the present invention is halbach magnetized.

Referring to FIG 5, the permanent magnet 130 is magnetized by halbach magnetization.

Particularly, first, the non-magnetized body magnetized to a permanent magnet 130, is manufactured. As explained above, the non-magnetized body is produced to a continuous belt shape including a rare earth metal, and mixed with substances such as rubber. Then the non-magnetized body is magnetized by halbach magnetization. When halbach magnetization takes place, to sinuously magnetize the permanent magnet 130, the non-magnetized body is magnetized to increase the angle between the magnetic direction of the non-magnetized body and the magnetic axis, as it gets away from the magnetic axis. The above angle is limited to ±90 degrees.

On this embodiment, the non-magnetized body is installed onto the rotor 120, then magnetized and finally manufactured to the permanent magnet 130. If its manufactured like the above, the installation of the permanent magnet 130 to the rotor 120 become easy. Therefore, the manufacturing of the motor 100 may become easier.

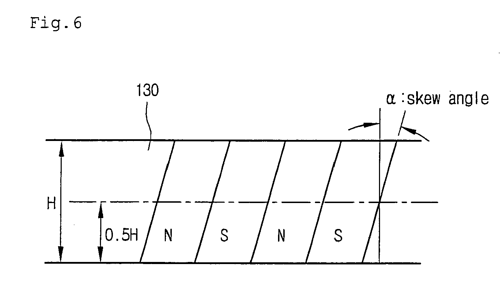

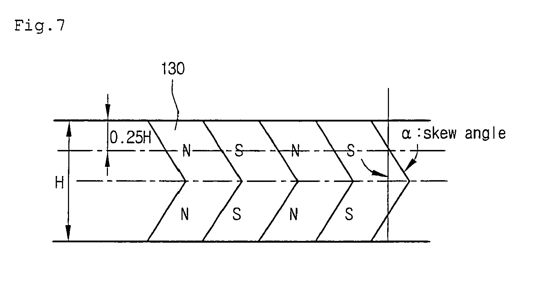

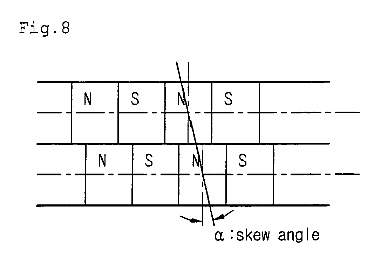

FIG. 6 is a drawing showing the state that the permanent magnet used for a motor according to the present invention is skew magnetized. FIG. 7 and 8 are drawings showing the state that the permanent magnets according to other embodiments of the present invention are skew magnetized.

Referring to FIG 6 or FIG 8, the permanent magnet 130 is magnetized by the skew magnetization method. Particularly, the non-magnetized magnetized to the permanent magnet 130 includes the rare earth metal and is manufactured in a continuous belt form. Then the non-magnetized body is skew magnetized with a predetermined angle (_).

It is preferable that skew angle is in the range of 360/LCM (S, P) or 360/S, where on the center line(c) of the permanent magnet 130 basis, the slot number of the stator 110 (S), the pole number of the permanent magnetic 130 (P) and the LCM of the slot number and the pole number are based.

The following is the explanation of the combination structure of the permanent magnet 130 and the rotor 120.

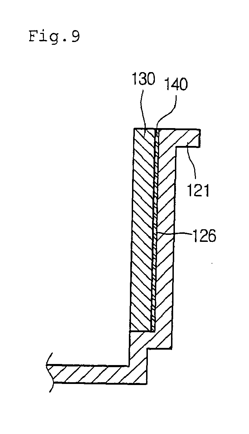

FIG 9 is a cross-sectional view of FIG 1's I-I.

Referring to FIG 9, the permanent magnet 130 from this invention is seated on the mounting portion 126 formed on the inside of the rotor frame 121, and attached with the double sticky sided tape 140.

Particularly, the thickness of the double sticky sided tape 140 is up to tens of micrometer. The thickness of the double sticky sided tape 140 is formed thinner than the gap formed between the permanent magnet 130 and stator 110, and smaller than the thickness of the permanent magnet 130 and the rotor frame 121.

Preferably, as the permanent magnet 130, the double sticky sided tape 140 is a single body and formed continuously.

Therefore, with the double sticky side tape 140 is used to attach the permanent magnet 130 and rotor frame 121, the magnetic gap between the two is minimized.

Preferably, the adhesive strength of the tape 140 should be larger than the maximum force operating between the stator 110 and rotor 130 when the motor drives.

To attach the permanent magnet 130 to the rotor frame 121, first, prepare the rotor frame 121, the permanent magnet 130 and the double sticky sided tape 140. As explained, the permanent magnet 130 includes the rare earth metal, and manufactured in a continuous belt form.

Then, the double sticky sided tape 140 is attached to the outer surface of the permanent magnet 130. It is preferable to set the width for the double sticky sided tape 140 should be corresponding with the width of the permanent magnet 130. The permanent magnet 130 is attached to the mounting portion 126 of the rotor frame 121, that is, the inner side of the rotor frame 121.

At this point, not attaching the double sticky sided tape 140 to the permanent magnet 130 but attaching to the rotor frame 121, the permanent magnet 130 may be attached to the rotor frame 121.

Therefore, using the double sticky sided tape 140 to simply attach the permanent magnet 130 to the rotor frame 121, work efficiency is increased and manufacturing costs were reduced.

The magnetic gap that forms between the permanent magnet 130 and rotor frame 121 has been reduced to the thickness of the double sticky sided tape 140, and by having a homogenous thickness of the double sticky sided tape 140, the performance of the motor 100 was enhanced due to the stable and constant magnetic gap between the permanent magnet 130 and rotor frame 121.

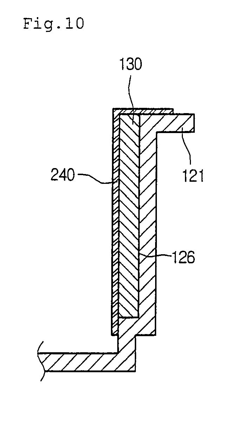

FIG 10 is a cross-sectional view of I-I'of FIG 1 according to other embodiment of the present invention.

Referring to FIG 10, the permanent magnet 130 is installed on the rotor frame 121 with a single sticky sided tape 240.

Particularly, the single sticky sided tape 240, different from the double sticky sided tape, has an adhesive strength on the only one side thereof. Also, the width of the single sticky sided tape 240 is formed to be wider than the width of the permanent magnet 130 so that the permanent magnet 130 and the rotor frame 121 can be attached together.

To attach the permanent magnet 130 to the rotor frame 121, first seated the permanent magnet 130 to the mounting portion 126 of the rotor frame 121. Then, with adhesive side of the single sticky sided tape 240, enclosed the permanent magnet 130. In that case, the single sticky sided tape 240 encloses the permanent magnet 130 and predetermined portion of the rotor frame 121, and the permanent magnet 130 is attached to the rotor frame 121.

According to this embodiment, adhesive materials is not present between the permanent magnet 130 and rotor frame 121, which dramatically decrease the magnetic gap formed between the permanent magnet 130 and rotor frame 121.

Further, by enclosing the permanent magnet 130, placed on the mounting portion 126, and rotor frame 121 together with the adhesive side of the single sticky sided tape 240, work efficiency improves and manufacturing time and cost decrease.

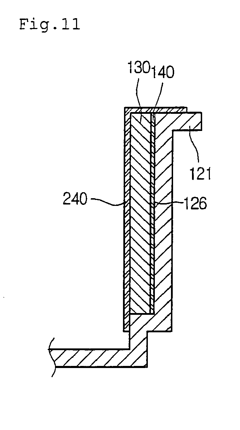

FIG 11 is a cross-sectional view of I-I' in FIG 1 according to another embodiment of the present invention.

Referring to FIG 11, the permanent magnet 130 is attached primarily to the rotor frame 121 with the double sticky sided tape 140, and enclosed repeatedly with single sticky sided tape 240 and attached secondarily to rotor frame 121.

To attach the permanent magnet 130 to the rotor frame 121, first attach the double sticky sided tape 140 to the outer surface of the permanent magnet 130 and/or the inner surface of the rotor frame 121, and then attach the permanent magnet 130 to the rotor frame 21. After that, while the permanent magnet 130 is still attached to the rotor frame 121, enclose the inner surface of the permanent magnet 130 with the adhesive side of the single sticky sided tape 240. Then, the permanent magnet 130 and rotor frame 121 is attached on the one side of the single sticky sided tape 240.

According to this embodiment, the permanent magnet 130 is attached firmly to the rotor frame 121, which has an advantage to prevent the permanent magnet 130 to breakaway after the magnetization.

## Claims

1. a motor comprising a stator, a rotor rotating to the stator and attaching a permanent magnet, **characterized in that** the permanent magnet is a continuously formed single body and is able to be bent.

2. The motor according to claim 1, wherein the permanent magnet is formed a continuous belt type that a length thereof is longer than a height thereof.

3. The motor according to claim 1, wherein the permanent magnet magnetized by halbach magnetization or radial magnetization or by skew magnetization, and a skew angel of the skew magnetization is in a range of 360/LCM(S, P) or 360/S, where the number of the rotor slot (S) and the number of the permanent magnet pole (P) is based from the center of the permanent magnet.

4. The motor according to claim 1, wherein the ends of the both side of the permanent magnet are combined and the permanent magnet forms a closed curve.

5. The motor according to claim 1, wherein a height difference of the permanent magnet is formed at least one surface of the permanent magnet.

6. The motor according to claim 1, wherein the permanent magnet is attached to the rotor with an adhesive tape having an adhesive strength on at least one surface thereof.

7. The motor manufacturing method comprising:
preparing a stator, a rotor and a continuously formed non-magnetized body;
attaching the non-magnetized body to the rotor; and,
manufacturing a permanent magnet by magnetizing the non-magnetized body installed in the rotor.

8. The motor manufacturing method according to claim 7, wherein the manufacturing the permanent magnet by magnetizing the non-magnetized body is magnetized by halbach magnetization or radial magnetization or skew magnetization.

9. The motor manufacturing method according to claim 7, wherein the attaching the non-magnetized body to the rotor is accomplished by an adhesive tape that has an adhesive strength on at least one side thereof.

10. The motor manufacturing method according to claim 9, wherein the attaching the non-magnetized body to the rotor comprises:
attaching the tape to the non-magnetized body or the rotor;
attaching the non-magnetized body and the rotor each other by the tape attached therein.

11. The motor manufacturing method according to claim 9, wherein the attaching the non-magnetized body to the rotor comprises:
mounting the non-magnetized body to the rotor;
attaching the non-magnetized body and the rotor together with the one surface of the tape.
